# FASCICULE DE BREVET EUROPEEN

(11) **EP 0 673 703 B1**
(45) Date de publication et mention de la délivrance du brevet: **07.01.1998**
(21) Numéro de dépôt: 95400623.5
(22) Date de dépôt: 21.03.1995
(51) Int. Cl.: B23K 9/028

(54) **Dispositif de soudage d'un manchon dans un piquage d'une canalisation circulaire d'accès difficile**
Schweissgerät für eine Muffe in einer Abzweigleitung einer kreisförmigen schwer zugänglichen Rohrleitung
Welding device of a sleeve in a branch pipe of a circular piping having difficult access

(30) Priorité: 23.03.1994 FR 9403418
(43) Date de publication de la demande: 27.09.1995
(73) Titulaire: COMPAGNIE GENERALE DES MATIERES NUCLEAIRES, F-78140 Velizy Villacoublay (FR)
(72) Inventeur: Deschamps, Jean-Pierre, F-50460 Urville-Nacqueville (FR)
(74) Mandataire: Dubois-Chabert, Guy

(56) Documents cités:
- EP-A- 0 038 270
- EP-A- 0 298 841
- DE-A- 3 013 562
- FR-A- 2 692 972
- US-A- 3 424 887
- US-A- 3 493 716
- US-A- 3 841 547
- US-A- 3 987 274
- US-A- 4 306 134

## Description

### Domaine de l'invention

L'invention concerne le soudage d'un manchon à l'intérieur du piquage d'une canalisation circulaire dont l'accès est difficile ou interdit à un opérateur. Le manchon sert à renforcer le piquage, c'est-à-dire la fixation, de la canalisation sur une autre canalisation ou une cuve. Une application particulière est destinée au renforcement d'un piquage d'une canalisation circulaire de fonctionnement se trouvant au fond d'une cuve ou d'un tube dissolveur dans une installation de traitement de produits radiaoctifs. Ce type de dispositif est donc robotisé et commandé de l'extérieur de la canalisation principale sur laquelle la canalisation circulaire recevant le manchon est connectée.

### Art antérieur et problème posé

Dans le cadre du retraitement ou du traitement des éléments de combustibles irradiés, les assemblages irradiés sont d'abord sectionnés, puis immergés dans un réactif, qui est généralement de l'acide nitrique chaud. Au moyen d'une cisaille, on fait ainsi tomber des fragments de combustibles, contenant de la poudre d'oxyde, dans un tube dissolveur. Celui-ci peut se présenter sous la forme d'un puits, c'est-à-dire d'un grand tube vertical, contenant un panier immergé dans une solution d'acide nitrique.

Ce type de dissolveur comprend plusieurs canalisations auxiliaires nécessaires à son fonctionnement, en particulier pour l'évacuation des vapeurs et gaz de dissolution vers un condenseur et des conduites appartenant à un circuit de vidange de la solution de dissolution vers une cuve de stockage. Il peut également comprendre un circuit de bullage-agitation permettant d'homogénéiser la solution utilisée. En d'autres termes, dans le fond de la cuve du dissolveur se trouve au moins un piquage de canalisation de fonctionnement, cette dernière étant généralement de section cylindrique.

L'éventuel entretien d'un dissolveur, et en particulier de sa partie inférieure, ne peuvent se faire qu'au moyen de machines robotisées, l'accès y étant interdit à des personnes humaines, compte tenu du taux d'irradiation de cette zone. Or, dans le cadre d'un éventuel entretien d'un tel dissolveur, il est nécessaire quelquefois de renforcer le piquage de certaines canalisations, c'est-à-dire de renforcer la paroi du début de cette canalisation, au niveau de son raccord sur la cuve principale du dissolveur. En effet, la connexion de telles canalisations sur la virole principale de la cuve du dissolveur nécessite des soudages. Il peut s'avérer nécessaire de renforcer de tels soudages ou, de manière générale, la connexion, c'est-à-dire le piquage, de telles canalisations.

D'autre part, le document de brevet FR-A-2 623 115 décrit un dispositif de soudage de l'extrémité d'une pièce tubulaire fixée à l'intérieur d'un alésage débouchant sur une face d'une plaque, telle qu'une plaque tubulaire d'un générateur de vapeur. Un tel dispositif est bien entendu commandé à distance et permet donc d'intervenir par soudage dans un générateur de vapeur. Par contre, il n'est pas adapté à venir souder un manchon à l'entrée d'une canalisation en bas d'un tube dissolveur pour des questions de mise en place du manchon et de configurations spatiales de l'intérieur du tube dissolveur.

De plus, par le document DE-A-30 13562, on connaît une tête de soudage d'une surface intérieure.

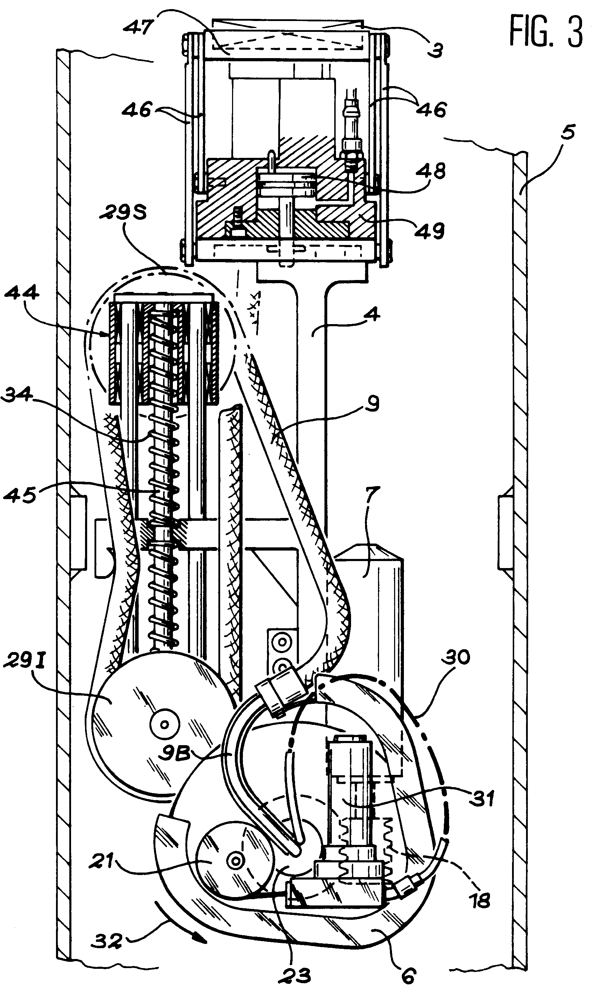

La figure 3 décrit plus particulièrement le soudage d'une surface intérieure d'une canalisation de vanne qui s'apparente à un piquage débouchant dans un carter plus important. La tête de soudage peut tourner autour de l'axe de la canalisation à souder grâce à un support monté rotatif et sur rotule. Elle comprend un support assimilable à une platine de connexion, des moyens de commande et d'alimentation en courant électrique. Par contre, le soudage mis en oeuvre ici est un soudage électrique avec électrodes.

Le but de l'invention est de remédier à cet inconvénient en proposant un dispositif susceptible d'être amené en bas du tube dissolveur pour venir souder un manchon à l'entrée du piquage d'une canalisation auxiliaire.

### Résumé de l'invention

L'objet principal de l'invention est donc un dispositif de soudage d'un manchon à l'intérieur d'un piquage d'une canalisation circulaire d'axe déterminé et d'accès difficile, ce dispositif comportant les caractéristiques de la revendication 1.

La réalisation principale de la tête de soudage prévoit qu'elle est fixée sur un arbre creux devant être positionné horizontalement et centré autour de l'axe de la canalisation.

Dans le cas d'une tête de soudage fonctionnant avec un métal d'apport par fil, celle-ci comprend un système de cisaillement pyrotechnique du fil de métal d'apport.

Dans ce cas, elle comprend également de préférence une bobine de métal d'apport autour duquel celui-ci est stocké.

Un moteur d'entraînement du fil de métal d'apport peut avantageusement compléter cet ensemble.

L'entraînement en rotation de la tête de soudage se fait de préférence au moyen d'un système roue/vis sans fin pour entraîner l'arbre creux à l'extrémité duquel la tête de soudage est fixée.

Les moyens de maintien du manchon comprennent de préférence :
- un piston de serrage monté coulissant autour de l'arbre creux et à une première extrémité de laquelle est fixé une première bague conique ;
- une deuxième bague conique fixe par rapport au support est placé autour du piston, en regard et de conicité inversée par rapport à la première bague conique ;
- des secteurs de serrage placés élastiquement autour des deux bagues coniques et prenant appui sur les parties coniques de ces bagues coniques ;
- au moins un ressort de compression en appui sur le piston pour rapprocher les secteurs et lâcher le manchon ;
- une chambre étanche formée par une face latérale du piston et une surface latérale d'une partie de fixation de la deuxième bague conique ; et
- une arrivée d'air sous pression débouchant dans la chambre pour rapprocher les secteurs en déplaçant le piston.

Pour faciliter le maintien du câble d'alimentation générale, il est avantageux d'utiliser une gouttière extérieure tournante pour éviter que ce câble d'alimentation générale ne viennent frotter contre différents organes du dispositif.

On utilise, de préférence, un système de tension du câble utilisant au moins deux poulies montées chacune tournante autour d'un axe horizontal, les deux axes horizontaux étant maintenus écartés l'un de l'autre par un dispositif à ressort.

On complète avantageusement l'ensemble d'un dispositif mécanique de liaison mobile entre le support et la platine de connexion, pour permettre un déblocage de l'ensemble.

### Liste des figures

Quelques figures sont annexées à la description suivante d'une réalisation préférentielle de l'invention. Elles représentent respectivement :
- figure 1, en coupe verticale, l'intérieur de la partie inférieure d'un tube dissolveur dans laquelle est placé le dispositif selon l'invention ;
- figure 2, en coupe verticale, une vue détaillée du dispositif selon l'invention, installé tel que décrit par la figure 1 ; et
- figure 3, une vue latérale du dispositif selon l'invention.

### Description détaillée d'une réalisation de l'invention

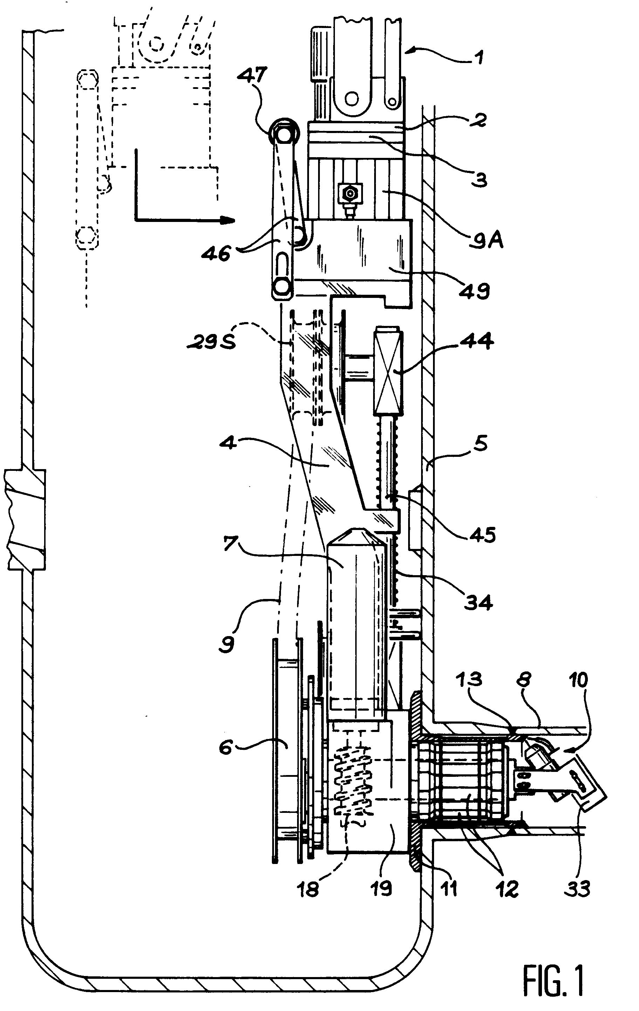

Sur la figure 1, la base d'un tube dissolveur 5 est représentée avec au moins une canalisation horizontale auxiliaire 8 débouchant dans celle-ci. Un manchon 11 a également été représenté, fixé à l'intérieur de cette canalisation 8, au niveau d'une éventuelle soudure 13 servant à la connexion de cette canalisation 8 sur la partie inférieure du tube dissolveur 5.

A cet effet, le dispositif selon l'invention est introduit dans le tube dissolveur au moyen d'un porteur 1 dont simplement l'extrémité inférieure est représentée, notamment une platine standard de connexion 2. Celle-ci est portée de façon pendulaire et constitue un élément standard de connexion pour alimenter un dispositif quelconque en électricité, eau, air comprimé,... Cette partie inférieure du porteur 1, c'est-à-dire sa platine standard de connexion 2 et la platine de connexion 3 du dispositif selon l'invention sont également représentées en traits tiretés sur la gauche pour schématiser le déplacement pendulaire possible de ces éléments.

Le dispositif selon l'invention comprend donc une platine de connexion 3 fixée par rapport à un support 4 et une tête de soudage inférieure 10. Entre la platine de connexion 3 et le support 4, on utilise de préférence un système mécanique de liaison mobile permettant certains mouvements du support 4 par rapport à la platine de connexion 3. Il se compose de deux paires de bielles 46 montées pivotantes l'une par rapport à l'autre deux à deux. D'autre part, deux d'entre elles sont articulées sur le plateau 49 et les deux autres sur le support 4 monté coulissant verticalement par rapport à la platine de connexion 3 par l'intermédiaire d'un piston. Le support 4 peut ainsi être translaté horizontalement et verticalement selon deux amplitudes déterminées et liées cinématiquement. Ceci permet de faciliter l'extraction de l'ensemble, lors d'un éventuel blocage du module dans la canalisation à souder.

Le support 4 permet également la fixation d'un premier moto-réducteur 7 destiné à entraîner en rotation la tête de soudage 10. Celui-ci est représenté verticalement car la réalisation décrite montre l'utilisation d'un système roue/vis sans fin 18. Néanmoins, d'autres réalisations sont possibles.

Sur cette figure 1 est également représenté le câble d'alimentation générale 9 dont une première extrémité 9A est fixée à la platine de connexion 3 du dispositif selon l'invention sous la forme de plusieurs câbles détachés les uns des autres. L'autre extrémité, non représentée, du câble d'alimentation générale 9 est fixée sur la tête de soudage.

Par contre, lors des différents déplacements verticaux du dispositif à l'intérieur du tube dissolveur, il est nécessaire de stocker ou de ranger ce câble d'alimentation générale 9. On utilise, entre autre, un système de tension de ce câble schématisé sur cette figure 1 par une première roue supérieure 29S autour de laquelle le câble d'alimentation générale 9 est tendu.

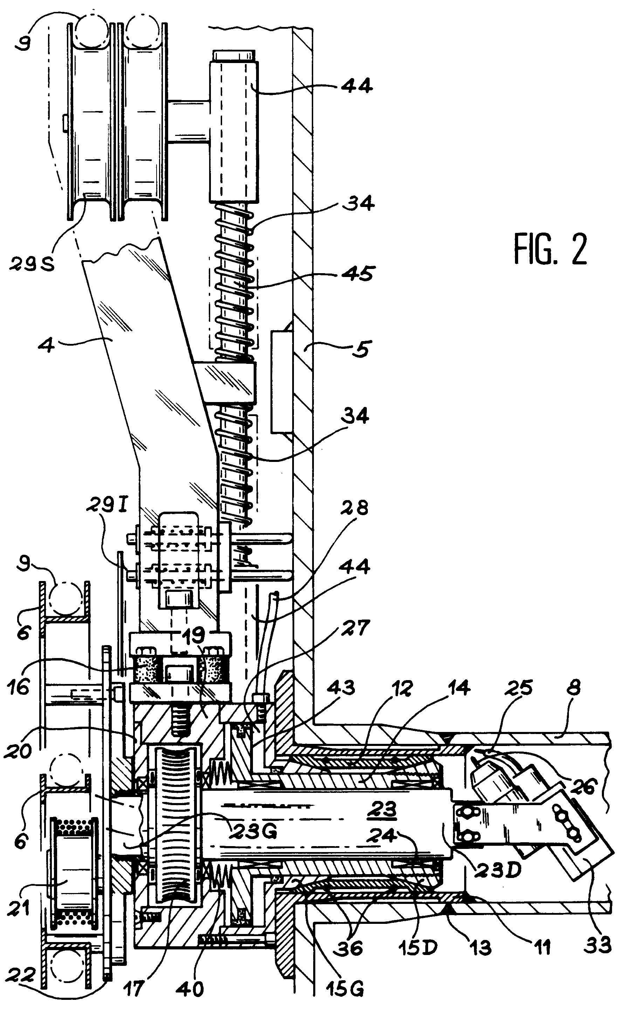

De plus, une gouttière de retenue 6 de ce câble d'alimentation 9 est prévue au niveau de la tête de soudage pour éviter que ce câble d'alimentation 9 vienne se frotter contre les organes de la tête de soudage. Ces différents éléments seront mieux décrits à l'aide de la figure 2.

Cette dernière montre donc de nouveau une partie de la cuve du tube dissolveur 5, le support 4 du dispositif selon l'invention, la gouttière de maintien 6 du câble d'alimentation 9, la roue supérieure 29S.

Des manchons souples 16 sont utilisés entre le support 4 et un carter 19 du dispositif pour compenser d'éventuels défauts d'alignement lors de l'introduction.

La tête de soudage est donc fixée à une extrémité 23D d'un arbre creux 23 positionné de façon coaxiale avec l'axe de la canalisation 8 à réparer. Cet arbre 23 est monté tournant grâce à des paliers à roulements 24 dans le piston de manoeuvre 14. Ainsi, l'électrode de soudage 26 et l'extrémité d'alimentation en métal 25 de la tête de soudage, dont les mouvements d'avance et de recul sont fournis par un dispositif de réglage automatique de l'arc, peuvent être pivotées autour de l'axe horizontal de la canalisation 8 et effectuer une soudure sur la paroi interne de cette dernière. Cet ensemble peut se compléter avantageusement d'une électrode spécialement conçue pour casser au cas de collage de cette dernière.

L'extrémité gauche 23G de l'arbre 23 est solidaire en rotation d'une roue dentée 17 du système roue/vis sans fin entraîné par le moto-réducteur, référencé 7 sur la figure 1. Le soudage de l'intérieur de la canalisation 8 peut donc être ainsi effectué sur toute la circonférence de celle-ci. On note qu'une dynamo tachymétrique peut être montée en bout d'arbre moteur pour fournir un signal permettant de réguler la vitesse d'entraînement en rotation de la tête de soudage.

Sur cette figure 2, il est possible de voir les moyens de maintien du manchon 11 à l'intérieur du piquage de la canalisation 8. Ces moyens comprennent principalement un piston de manoeuvre 14 monté coulissant autour de l'arbre 23. A cet effet, des roulements à aiguilles 24 sont placés entre ce piston 14 et l'arbre creux 23, la bague intérieure des roulements à aiguilles 24 permettant une tanslation de l'un par rapport à l'autre.

A l'extrémité droite du piston 14 est fixée une bague conique 15D. De façon opposée, une deuxième bague conique 15G est placé à gauche autour du piston 14. Cette bague a une conicité inversée par rapport à celle de la première bague conique 15D. De plus, cette deuxième bague conique 15G est fixe par rapport au support 4. De la sorte, une translation du piston 14 autour de l'arbre creux 23 provoque un rapprochement ou un écartement d'une bague conique par rapport à l'autre.

Autour de ces deux bagues coniques 15D et 15G et autour du piston 14, est placée une série de secteurs de serrage 12, prenant appui sur les faces inclinées des deux bagues coniques 15D et 15G. Ils sont maintenus serrés autour de ces deux bagues coniques 15D et 15G au moyen de deux joints élastiques 36. Ils constituent ainsi une bague expansible destinée à être introduite à l'intérieur du manchon 11 à souder à l'intérieur de la canalisation 8. La translation vers la gauche du piston 14 provoque donc le rapprochement des deux bagues coniques 15D et 15G et l'expansion des secteurs de serrage 12. En conséquence, le manchon peut ainsi être saisi et transporté par le dispositif selon l'invention pour être introduit à l'intérieur du piquage de la canalisation auxiliaire 8 à renforcer.

Bien entendu, une manoeuvre inverse, c'est-à-dire un écartement des deux bagues coniques 15D et 15G aboutit au rapprochement des secteurs de serrage 12 et permet le lâchage du manchon 11.

Cette opération est obtenue grâce à au moins un ressort 40, mais de préférence six ressorts répartis angulairement autour de l'arbre creux 23, prenant appui sur le carter fixe 19 et sur le piston mobile 14. De plus, de l'autre côté de la partie latérale 43 du piston mobile 14, se trouve donc une chambre étanche expansible 27 délimitée par cette partie et la paroi interne de la partie de fixation de la deuxième bague conique 15G. Une arrivée d'air comprimé 28 est installée dans cette pièce pour permettre la mise sous pression de cette chambre 27. La mise sous pression de cette chambre étanche 27 aboutit à l'agrandissement de cette chambre, à la translation vers la gauche du piston mobile 14 et à la compression des ressorts 40. L'écartement des secteurs de serrage 12 est ainsi obtenu et le serrage du manchon 11 peut ainsi avoir lieu. Une vanne d'isolement permet de maintenir le circuit d'alimentation en air comprimé et aboutissant dans la chambre 27 sous pression. On maintient ainsi le manchon 11 fixé sur le dispositif de soudage selon l'invention pendant son transport dans la cellule du tube dissolveur. Une mise en dépression de cette chambre 27 aboutit bien évidemment à l'opération inverse, c'est-à-dire à un resserrement des secteurs de serrage 12 et à un éventuel lâchage du manchon 11.

Sur la partie gauche de la figure 2 a été représentée en plusieurs positions la gouttière 6. De même, le câble d'alimentation générale 9 a été représenté en correspondance à plusieurs endroits. La forme et l'utilisation de cette gouttière 6 est explicité en regard de la figure 3. Toutefois, on peut signaler qu'elle est montée solidaire en rotation avec l'arbre creux 23, par l'intermédiaire du plateau 22 fixée sur l'extrémité gauche 23G de l'arbre creux 23.

On remarque qu'un flasque 20 ferme le carter 19 contenant, entre autres, la roue dentée 23G.

Sur le haut de la figure 2 a été ébauchée la représentation d'un système de compensation de longueur ou de tension du câble d'alimentation générale 9. Ce dispositif est mieux explicité en regard de la figure 3.

Cette dernière met donc en évidence la présence de deux poulies de tension supérieure 29S et inférieure 29I. Ces deux poulies sont montées libres en rotation autour d'axes horizontaux. Ces derniers sont montés chacun, grâce à un manchon référencé 44 sur la figure 2, mobile en translation verticale autour d'une colonne 45. Un ressort 34 est monté autour de cette colonne 45 et a tendance à écarter les manchons respectifs 44 des roues supérieure 29S et inférieure 29I.

On conçoit donc que le câble d'alimentation générale 9 qui est enroulé autour de ces poulies 29S et 29I puisse être systématiquement tendu au cas où celui-ci aurait tendance à avoir une tension trop faible, c'est-à-dire dans le cas où le dispositif selon l'invention doit être remonté. Ainsi, il est possible de stocker ce câble d'alimentation général 9 quelque soit la position du dispositif selon l'invention dans le tube dissolveur 5.

Cette figure 3 montre également la bobine 21 autour de laquelle est stocké le fil de métal d'apport 30 pour la soudure. Celui-ci est dévidé en direction d'un moteur d'entraînement de métal d'apport 31, lequel fait avancer le fil de métal 30 à l'intérieur de l'arbre creux 23, c'est-à-dire vers la tête de soudage.

Cet ensemble peut se compléter avantageusement d'un dispositif de cisaillement pyrotechnique 33 placé sur le trajet du fil de métal d'apport 30, en sortie de l'arbre creux 23. Ce dispositif de cisaillement pyrotechnique permet de couper le fil de métal 30 en cas de collage de ce dernier.

On remarque que le câble d'alimentation générale 9 a une deuxième extrémité 9B pénétrant à l'intérieur de l'arbre creux 23 pour alimenter en énergie électrique la tête de soudage.

La gouttière 6 a une forme de manière à entourer ces différents éléments placés au niveau de la tête de soudage.

Comme le montre la figure 2, sa section est en forme de U de manière à constituer un rail de guidage pour le câble d'alimentation générale 9, lorsque la tête de soudage tourne d'au moins un tour autour de son axe horizontal.

En effet, si on considère que la position du dispositif, tel que représenté sur la figure 3, correspond au début du soudage, une rotation doit avoir lieu dans le sens indiqué par la flèche 32. Le câble d'alimentation générale 9 a donc tendance à venir s'enrouler dans la gouttière 6. De cette manière, on évite que celui-ci vienne se frotter et se détériorer auprès des différents organes constitutifs du dispositif selon l'invention. Une manoeuvre inverse, c'est-à-dire une rotation dans le sens opposé, aboutit évidemment à une libération du câble d'alimentation générale 9.

Dans la partie supérieure de la figure 3, on retrouve les deux paires de bielles 46 dont l'articulation réciproque peut être bloquée par l'extension du vérin de serrage 47 placé entre les deux paires de bielles. Le piston de désolidarisation 48 est également représenté solidaire du plateau 49 et monté coulissant verticalement par rapport à la platine de connexion 3. Ce dispositif permet avantageusement l'excitation du dispositif de soudage de la canalisation 8 en cas d'anomalie de fonctionnement.

On conçoit que le dispositif de soudage selon l'invention ainsi suspendu par un dispositif porteur et introduit à l'intérieur d'un tube dissolveur puisse être positionné à l'intérieur de n'importe quel canalisation latérale à renforcer au moyen d'un manchon soudé. Le caractère pendulaire du dispositif porteur permet d'obtenir pratiquement tous les déplacements nécessaires à ce positionnement.

## Revendications

1. Dispositif robotisé de soudage d'un manchon (11) à l'intérieur d'un piquage d'une canalisation circulaire (8) d'axe déterminé et d'accès difficile, le dispositif comportant :
- un support (4) adaptable à une platine de connexion (2) d'un dispositif porteur ;
- une tête de soudage (10) montée tournante par rapport au support (4) autour de l'axe de la canalisation (8) pour souder sur 360° le manchon (11) sur la paroi interne de la canalisation (8) ;
- des moyens de commande de la tête de soudage (10) ;
- des moyens d'alimentation en courant électrique, constitués d'au moins un câble d'alimentation électrique général (9) ;
caractérisé en ce qu'il comprend :
- un motoréducteur (7) de mise en rotation de la tête de soudage (10), fixé sur un carter (19) solidaire du support (4) ;
- des moyens de transport et de maintien du manchon (11) contre la paroi de la canalisation (8) constitué d'une bague expansible (15D, 15G) destinée à être introduite à l'intérieur du manchon (11) et de moyens d'expansion (15) de la bague ;
- des moyens d'alimentation en métal.

2. Dispositif de soudage selon la revendication 1, caractérisé en ce qu'il comprend un arbre creux (23) devant être monté tournant horizontalement autour de l'axe de la canalisation (8) et sur laquelle est montée la tête de soudage.

3. Dispositif de soudage selon la revendication 1, caractérisé en ce que la tête de soudage (10) est en fonctionnement avec du métal d'apport par fil (30) et comporte un système de cisaillement pyrotechnique (33) du fil de métal d'apport (30).

4. Dispositif de soudage selon la revendication 1, caractérisé en ce que la tête de soudage (10) fonctionnant avec un métal d'apport par fil (30), comporte une bobine de stockage (21) du fil de métal (30).

5. Dispositif de soudage selon la revendication 4, caractérisé en ce qu'il comprend un moteur d'entraînement (31) du fil de métal d'apport (30).

6. Dispositif de soudage selon la revendication 1, caractérisé en ce qu'il comprend un système d'entraînement par roue (17)/vis sans fin (18) pour entraîner l'arbre creux (23) de la tête de soudage (10).

7. Dispositif de soudage selon la revendication 6, caractérisé en ce que les moyens de maintien du manchon (11) comprennent :
- un piston de serrage (14) monté coulissant autour de l'arbre creux (23) et à première extrémité duquel se trouve fixée une première bague conique (15D) ;
- une deuxième bague conique (15G) fixe par rapport au support (4) placée autour du piston (14) en regard et de conicité inversée par rapport à la première bague conique (15D) ;
- des secteurs de serrage (12) placés élastiquement autour des deux bagues coniques (15D, 15G) et prenant appui sur les parties coniques de celles-ci ;
- au moins un ressort de compression (40) en appui sur le piston (14) pour rapprocher les secteurs de serrage (12) et lâcher le manchon (11) ;
- une chambre étanche (27) formée par une partie latérale (43) du piston (14) et une face d'une partie de fixation de la deuxième bague conique (15G) ; et
- une arrivée d'air sous pression (28) dans la chambre étanche (27) pour rapprocher les secteurs de serrage (12) en déplaçant le piston (14).

8. Dispositif de soudage selon la revendication 2, caractérisé en ce qu'il comprend une gouttière externe (6) montée tournante sur l'arbre creux (23) par rapport au support (4) pour éviter que le câble d'alimentation générale (9) vienne frotter contre différents organes du dispositif.

9. Dispositif de soudage selon la revendication 1, caractérisé en ce qu'il comprend deux poulies (29S, 29I) de tension du câble d'alimentation générale (9), chacune de ce poulies étant chacune montée tournante autour d'un axe horizontal maintenu écarté l'un de l'autre par un dispositif à ressort (34).

10. Dispositif selon la revendication 1, caractérisé en ce qu'il comprend un dispositif mécanique de liaison mobile entre le support (4) et la platine de connexion (3) pour faciliter l'extraction de l'ensemble lors d'un éventuel blocage dans une canalisation.

## Claims

1. Robotized device for welding a sleeve (11) within a branching point of a circular duct (8) having a given axis and which is difficult of access, said device comprising a support (4) fittable to a connecting plate (2) of a carrier device, a welding head (10) mounted in rotary manner with respect to the support (4) about the axis of the duct (8) in order to weld over 360° the sleeve (11) to the inner wall of the duct (8), means for controlling the welding head (10), means for the electric power supply, constituted by at least one general supply cable (9), characterized in that it comprises a geared motor (7) for rotating the welding head (10) and fixed to a casing (19) integral with the support (4), means for conveying and maintaining the sleeve (11) against the wall of the duct (8) constituted by an expandable ring (15d, 15g) to be introduced into the sleeve (11) and means (15) for expanding the ring and metal supply means.

2. Welding device according to claim 1, characterized in that it has a hollow shaft (23) to be installed so as to rotate horizontally about the axis of the duct (8) and on which is installed the welding head.

3. Welding device according to claim 1, characterized in that the welding head (10) operates with filler metal wire (30) and comprises a system (33) for the pyrotechnic shearing of the filler metal wire (30).

4. Welding device according to claim 1, characterized in that the welding head (10) operating with a filler metal wire (30) comprises a drum (21) for storing the metal wire (30).

5. Welding device according to claim 4, characterized in that it has a motor (31) for feeding the filler metal wire (30).

6. Welding device according to claim 1, characterized in that it has a worm (18)/wheel (17) drive system for driving the hollow shaft (23) of the welding head (10).

7. Welding device according to claim 6, characterized in that the means for retaining the sleeve (11) comprise:
a tightening piston (14) mounted so as to slide about the hollow shaft (23) and to a first end of which is fixed a first conical ring (15D),
a second conical ring (15G) fixed with respect to the support (4) is placed around the piston (14) in facing manner and having a reverse conicity to that of the first conical ring (15D),
tightening sectors (12) positioned elastically around the two conical rings (15D, 15G) and bearing on the conical portions of said conical rings,
at least one compression spring (40) bearing on the piston (14) in order to move together the sectors (12) and slacken the sleeve (11),
a tight chamber (27) formed by one lateral face (43) of the piston (14) and one lateral surface of a fixing portion of the second conical ring (15G) and
a pressurized air intake (28) issuing into the chamber (27) for moving together the sectors (12) on displacing the piston (14).

8. Welding device according to claim 2, characterized in that it has an external channel (6) mounted so as to rotate on the hollow shaft (23) with respect to the support (4) in order to prevent the general supply cable (9) from rubbing against different members of the device.

9. Welding device according to claim 1, characterized in that it has two pulleys (29S, 29I) for tensioning the general supply cable (9), each of the pulleys being mounted in rotary manner about a horizontal axis maintained spaced from one another by a spring device (34).

10. Device according to claim 1, characterized in that it has a mechanical, mobile connection device between the support (4) and the connection plate (3) to facilitate the extraction of the assembly in the case of a possible blocking in a duct.

## Patentansprüche

1. Schweißroboter für eine Muffe (11) in einer Abzweigleitung einer kreisförmigen Rohrleitung mit bestimmter bzw. festgelegter Achse und schwierigem Zugang, umfassend:
- einen Träger (4), anpaßbar an eine Verbindungsplatte (2) einer Trageinrichtung;
- einen Schweißkopf (10), drehbar in bezug auf den Träger (4), um die Achse der Rohrleitung (8) herum, um die Muffe (11) über 360° auf der Innenwand der Rohrleitung (8) festzuschweißen;
- Steuereinrichtungen des Schweißkopfs (10);
- Versorgungseinrichtungen mit elektrischem Strom, gebildet durch wenigstens ein Hauptversorgungskabel (9);
**dadurch gekennzeichnet**, daß er enthält:
- einen Getriebemotor (7) zum Drehen des Schweißkopfes (10), befestigt auf einem Gehäuse (19), das fest mit dem Träger (4) verbunden ist;
- Transport- und Halteeinrichtungen der Muffe (11) gegen die Wand der Rohrleitung (8), gebildet durch einen ausdehnbaren Ring (15D, 15G), einführbar in das Innere der Muffe (11), und Ausdehnungseinrichtungen (15) des Rings;
- Metallzuführungseinrichtungen.

2. Schweißroboter nach Anspruch 1, dadurch gekennzeichnet, daß er eine Hohlwelle (23) umfaßt, horizontal und um die Achse der Rohrleitung (8) drehbar montiert, an der der Schweißkopf befestigt ist.

3. Schweißroboter nach Anspruch 1, dadurch gekennzeichnet, daß der Schweißkopf (10) mit einem Schweißmetalldraht (30) arbeitet und ein pyrotechnisches Abschersystem (33) des Schweißmetalldrahts (30) umfaßt.

4. Schweißroboter nach Anspruch 1, dadurch gekennzeichnet, daß der mit einem Schweißmetalldraht (30) arbeitende Schweißkopf (10) eine Speicherspule (21) des Schweißmetalldrahts (30) umfaßt.

5. Schweißroboter nach Anspruch 4, dadurch gekennzeichnet, daß er einen Fördermotor (31) des Schweißmetalldrahts (30) umfaßt.

6. Schweißroboter nach Anspruch 1, dadurch gekennzeichnet, daß er ein Schneckengetriebe (17,18) umfaßt, um die Hohlwelle (23) des Schweißkopfs (10) anzutreiben.

7. Schweißroboter nach Anspruch 6, dadurch gekennzeichnet, daß die Halteeinrichtungen der Muffe (11) umfassen:
- einen Spannkolben (14), gleitend auf die Hohlwelle (23) montiert, an dessen erstem Ende ein erster konischer Ring (15D) befestigt ist;
- einen zweiten konischen Ring (15G), feststehend in bezug auf den Träger (4) auf den Kolben 14 montiert, dem ersten Ring (15D) gegenüberstehend und von umgekehrter Koneizität in bezug auf diesen;
- Spannsegmente (12), die elastisch um die beiden konischen Ringe (15D, 15G) herum angeordnet sind und auf deren konischen Teilen aufliegen;
- wenigstens eine auf den Kolben (14) wirkende Druckfeder (40), um die Spannsegmente (12) anzunähern und die Muffe (11) loszulassen;
- eine dichte Kammer (27), gebildet durch einen Seitenteil (43) des Kolbens (14) und einen Befestigungsteil des zweiten konischen Rings (15G); und
- eine Druckluftzuführung (28) in die dichte Kammer (27), um die Spannsegmente (12) anzunähern durch Verschieben des Kolbens (14).

8. Schweißroboter nach Anspruch 2, dadurch gekennzeichnet, daß er eine Außenrinne (6) umfaßt, drehbar in bezug auf den Träger (4) auf die Hohlwelle (23) montiert, um zu vermeiden, daß das Hauptversorgungskabel (9) sich mit diversen Teilen der Vorrichtung reibt.

9. Schweißroboter nach Anspruch 1, dadurch gekennzeichnet, daß er zwei Spannrollen (29S, 29I) für das Hauptversorgungskabel (9) umfaßt, wobei jede dieser Rollen drehbar auf eine horizontale Achse montiert ist, voneinander beabstandet durch eine Federeinrichtung (34).

10. Schweißroboter nach Anspruch 1, dadurch gekennzeichnet, daß er eine mechanische bewegliche Verbindungseinrichtung zwischen dem Träger (4) und der Verbindungsplatte (3) umfaßt, um das Herausnehmen des Aufbaus bei einer eventuellen Blockierung in einer Rohrleitung zu erleichtern.
